# EUROPEAN PATENT APPLICATION

(11) **EP 4 410 532 A1**
(43) Date of publication of application: **07.08.2024**
(21) Application number: 24154428.7
(22) Date of filing: 29.01.2024
(51) Int. Cl.: B32B 3/12, B32B 5/14, B32B 9/00, B32B 9/04, B33Y 80/00

(54) **COMPOSITE PANELS AND METHODS FOR MAKING THE SAME**

(30) Priority: 01.02.2023 US 202318162919
(71) Applicant: General Electric Company, Schenectady, NY 12345 (US)
(72) Inventor: DUNN, Daniel Gene, Niskayuna, 12309 (US); MCGUIGAN, Henry Charles, Niskayuna, 12309 (US); NAVOJOSKY, William Francis, Niskayuna, 12309 (US); SARRAFI-NOUR, Reza, Niskayuna, 12309 (US); DECESARE, Douglas Glenn, Niskayuna, 12309 (US)
(74) Representative: Openshaw & Co.

(57) **Abstract**

A composite panel (100) includes a core structure (120) comprising a plurality of hollow cells (130), the plurality of hollow cells (130) defined by a plurality of walls (132) extending from a first face (142) to a second face (144), wherein a cross-sectional geometry from the first face (142) to the second face (144) is nonuniform for at least one of the plurality of hollow cells (130); and a composite face sheet (110) bonded to the core structure (120) at the first face (142).

## Description

### FIELD

The present disclosure relates to composite panels, and more particularly, composite panels with core structures having a plurality of hollow cells.

### BACKGROUND

Modern machinery such as airplanes, automobiles, marine, rockets, space vehicles or industrial equipment may be subject to extreme operating conditions that include high temperatures, high pressure, and high speeds. Reinforced ceramic matrix composites ("CMCs") comprising fibers dispersed in continuous ceramic matrices of the same or a different composition are well suited for structural applications because of their toughness, thermal resistance, high-temperature strength, and chemical stability. Such composites typically have high strength-to-weight ratio and maintain this attribute over a broad range of temperatures that exceeds metallic alloys. This renders them attractive in applications in which weight is a concern and high temperature structural attributes highly constrain the design of components and systems, such as in aeronautic and space vehicle applications. Their stability at high temperatures renders CMCs very suitable in applications in which components are in contact with a high-temperature gas, such as in a gas turbine engine and re-entry conditions of space vehicles in terrestrial and non-terrestrial environments.

Further, these machines may produce noise. The environmental noise caused by airplanes, automobiles, and other modern machinery can often be an annoyance. To maintain noise below acceptable levels, noise suppression techniques are often employed. Noise suppression technology has a wide variety of industrial and residential applications. Noise suppression devices are often applied in heating ventilation and air conditioning (HVAC) systems, industrial machinery and complexes, transportation vehicles, and any machinery that may tend to produce unacceptably high levels of noise.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 provides an exploded perspective view of an exemplary composite panel with a plurality of cells, the cells being in a hexagonal shape;
FIG. 2 provides a cross-sectional slice of an embodiment of the composite panel where the plurality of cells are in the shape of a circle;
FIG. 3 provides a cross-sectional slice of another embodiment of the composite panel where the plurality of cells are in the shape of a square;
FIG. 4 provides a cross-sectional slice of an embodiment of the composite panel where the plurality of cells are each in the shape of a triangle;
FIG. 5 provides a cross-sectional slice view of a portion of a composite panel having a plurality of cells being closed on one face;
FIG. 6 provides a top view of a portion of a core structure with closed ends of a plurality of cells;
FIG. 7 provides a cross-sectional slice view of a portion of a composite panel having a plurality of cells with alternating closed ends;
FIG. 8 provides a cross-sectional slice view of a portion of a composite panel having a plurality of cells being partially closed on one face;
FIG. 9 provides a cross-sectional slice view of a portion of a composite panel having a plurality of cells having a tapered interface on a closed end of each cell;
FIG. 10 provides a cross-sectional slice view of a portion of a composite panel having a plurality of cells closed on one face with tapered interfaces and open on the opposite face with tapered interfaces;
FIG. 11 provides a cross-sectional slice view of a portion of a composite panel having a plurality of cells having alternating open positions;
FIG. 12 provides a cross-sectional slice view of a portion of a composite panel having a plurality of cells having a tapered interface on each of the one or more walls on both faces; and
FIG. 13 provides a flowchart diagram showing an exemplary method of manufacturing the composite panel.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

For purposes of the description hereinafter, the terms "upper", "lower", "right", "left", "vertical", "horizontal", "top", "bottom", "lateral", "longitudinal", and derivatives thereof shall relate to the embodiments as they are oriented in the drawing figures. However, it is to be understood that the embodiments may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

As used herein, the terms "first", "second", and "third" may be used interchangeably to distinguish one component from another and are not intended to signify location or importance of the individual components.

The singular forms "a", "an", and "the" include plural references unless the context clearly dictates otherwise.

The term "at least one of' in the context of, e.g., "at least one of A, B, and C" refers only A, only B, only C, or any combination of A, B, and C.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The term "turbomachine" or "turbomachinery" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

As used herein, ceramic matrix composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiOz), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiOz), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃ 2SiO₂), as well as glassy aluminosilicates.

In certain embodiments, the reinforcing fibers may be bundled or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine, space vehicle structure, and propulsion components used in higher temperature sections, such as airfoils (e.g., turbines, and vanes), combustors, shrouds and other like components, nozzles, transition ducts, thermal protection systems, TPS, aerodynamic control surfaces and leading edges that would benefit from the lighter-weight and higher temperature capability these materials can offer.

As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Binder Jet technology, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, or precursors for ultra-high-temperature ceramics, such as polymeric precursors. Each successive layer may be, for example, between about 10 µm and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to densification and solidification of powder material as a result of irradiating the powder material, including by way of melting, fusing, sintering, or the like.

The present disclosure is generally related to composite panels having a plurality of hollow cells. While ceramic composite materials provide good toughness, high thermal insulation, high-temperature strength, and chemical stability, the raw material and processing techniques can become expensive. Current structures capable of withstanding extreme operation conditions may be bulky, expensive, or have short lifespans. Accordingly, a lighter, stronger, and more cost-effective structure would be welcomed in the art. Composite panels can provide for similar properties while reducing weight of the component, and notably, the amount of ceramic matrix composite material used in the component. However, the relatively thin walls of the core structure provide limited bonding area to connect the core structure with one or more face sheets.

The present disclosure provides composite panels having a plurality of hollow cells, wherein one or more of the plurality of hollow cells have a cross-sectional geometry that is nonuniform. The nonuniformity of the cross-sectional geometry allows for a relatively hollow interior in the composite panel (thereby reducing weight) while also providing increased surface area and bonding capability between the core structure and the composite face sheet or composite back sheet.

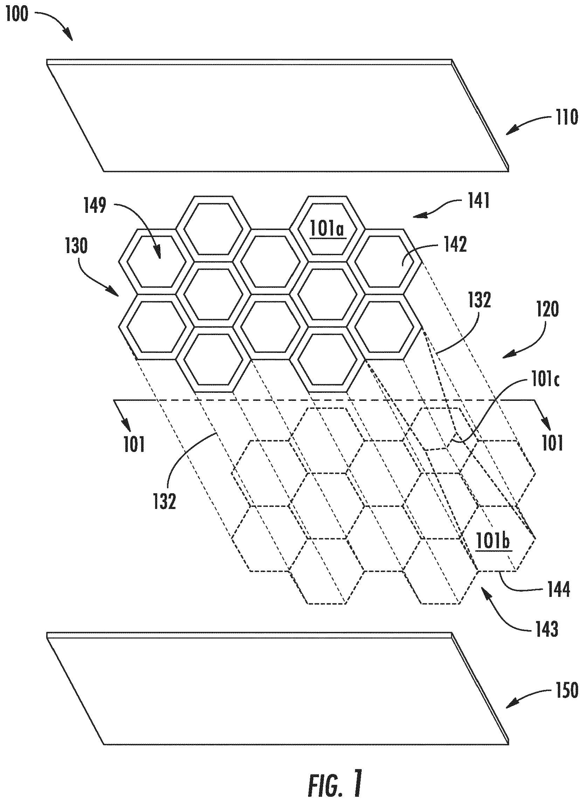

Referring now to the drawings, wherein identical numerals indicate the same elements throughout the figures, FIG. 1 shows an exploded view of composite panel 100 according to one or more embodiments described herein. The composite panel 100 generally comprises a core structure 120 and a composite face sheet 110 bonded to a first side of the core structure 120. For illustrative purposes and ease of clarity, the first side is also referred to as the top side 141. In some embodiments, such as that illustrated in FIG. 1, the composite panel 100 may further comprise a composite back sheet 150 bonded to a second side of the core structure 120 and opposite the first side. For illustrative purposes and ease of clarity, the second side is also referred to as the bottom side 143, which is opposite the top side 141. The core structure 120 may also comprise a cross-sectional geometry 101 that is nonuniform in a height direction between the top face 142 of top side 141 and the bottom face 144 of the bottom side 143. Such a configuration can provide a top face 142 of the core structure 120, a bottom side 143 of the core structure 120, or a combination thereof to produce greater bonding with the composite face sheet 110, the composite back sheet 150, or a combination thereof where present while also producing a lighter composite panel 100 compared to a completely solid composite material.

The composite face sheet 110, the composite back sheet 150, and the core structure 120 can comprise a combination of different materials to facilitate structural and mechanical requirements for the composite panel 100. The composite face sheet 110 and the composite back sheet 150 can comprise any composite material, such as a ceramic matrix composite (also referred to as "CMCs"). Composite materials generally comprise a fibrous reinforcement material embedded in matrix material. The reinforcement material serves as a load-bearing constituent of the composite material, while the matrix of a composite material serves to bind the fibers together and act as the medium by which an externally applied stress is transmitted and distributed to the fibers. Generally, CMCs are well suited for structural applications because of their toughness, thermal resistance, high-temperature strength, and chemical stability. Such composites may have high strength-to-weight ratio that renders them attractive in applications in which weight is a concern, such as in aeronautic applications. Further, their stability at high temperatures renders CMCs very suitable in applications in which components are in contact with a high-temperature gas, such as within a gas turbine engine.

Exemplary CMC materials may include silicon carbide (SiC), silicon, silica, carbon, or alumina matrix materials and combinations thereof. Ceramic fibers may be embedded within the matrix, such as oxidation stable reinforcing fibers including monofilaments like sapphire and silicon carbide (e.g., Textron's SCS-6), as well as rovings and yarn including silicon carbide (e.g., Nippon Carbon's NICALON^{®}, Ube Industries' TYRANNO^{®}, and Dow Corning's SYLRAMIC^{®}), alumina silicates (e.g., 3M's Nextel 440 and 480), and chopped whiskers and fibers (e.g., 3M's Nextel 440 and SAFFIL^{®}), and optionally ceramic particles (e.g., oxides of Si, Al, Zr, Y, and combinations thereof) and inorganic fillers (e.g., pyrophyllite, wollastonite, mica, talc, kyanite, and montmorillonite). For example, in certain embodiments, bundles of the fibers, which may include a ceramic refractory material coating, are formed as a reinforced tape, such as a unidirectional reinforced tape. A plurality of the tapes may be laid up together (e.g., as plies) to form a preform component. The bundles of fibers may be impregnated with a slurry composition prior to forming the preform (e.g., prepreg plies) or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition. In other embodiments, the CMC material may be formed as, e.g., a carbon fiber cloth rather than as a tape.

The core structure 120 may comprise a different material compared to the composite face sheet 110 or the composite back sheet 150. By way of non-limiting example, the core structure 120 may be a material that is less dense than the material of the composite face sheet 110 or the composite back sheet 150. However, even when the material of the core structure 120 is different, it is compatible with the composite face sheet 110 and the composite back sheet 150 to produce a sufficient bond between the components, including in extreme operating conditions such as high temperatures. In exemplary embodiments, the core structure 120 may include silicon, silicon carbide, alumina, carbon, or aluminosilicates, or combinations thereof.

As illustrated in FIG. 1, the core structure 120 comprises a plurality of hollow cells 130 defined by a plurality of walls 132 extending from a top face 142 on a top side 141 to a bottom face 144 on a bottom side 143. Each of the plurality of hollow cells 130 that form the core structure 120 can extend in a parallel direction with one another. Moreover, each top face 142 for each of the plurality of hollow cells 130 may be planar with one another so that the top side 141 of the core structure 120 comprises a substantially flat plane comprising a plurality of top faces 142 from the plurality of hollow cells 130. Likewise, each bottom face 144 for each of the plurality of hollow cells 130 may be planar with one another so that the bottom side 143 of the core structure 120 comprises a substantially flat plane comprising a plurality of bottom faces 144 from the plurality of hollow cells 130. In such embodiments, the top faces 142 and the bottom faces 144 may be parallel with one another such the composite face sheet 110 being bonded to the top side 141 of the core structure 120 will be parallel with the composite back sheet 150 being bonded to the bottom side 143 of the core structure 120.

While the core structure 120 in FIG. 1 is illustrated as having a plurality of hollow cells 130 that are parallel with one another, are the same length as one another, and comprise a top side 141 parallel with a bottom side 143, it should be appreciated that a variety of alternative or additional configurations may also be realized within the scope of this disclosure. For example, the plurality of hollow cells 130 may comprise different lengths, may comprise different orientations, may produce top sides 141 and bottom sides 143 that are not planar or not parallel with one another, or any combination thereof.

As illustrated in FIG. 1, the plurality of walls 132 of the plurality of hollow cells 130 define the shape, and more specifically, the cross-sectional geometry 101, of each of the plurality of hollow cells 130. That is, the plurality of walls 132 create a partially closed structure (i.e., enclosed by the plurality of walls 132 on the side but potentially open on the ends at the top face 142 or the bottom face 144) to define a hollow interior 149 to form a cross-sectional geometry 101 for each of the plurality of cells. As used herein, the cross-sectional geometry 101 refers to the open, or closed, space between the plurality of walls 132 at any point along the length of any individual cell. For example, each cell 130 has a top cross-sectional geometry 101a at its top face 142 at the top side 141 of the core structure 120, and a bottom cross-sectional geometry 101b at its bottom face 144 at the bottom side 143 of the core structure 120. The plurality of walls 132 may be brought together to form the plurality of hollows cells 130 using a variety of different techniques. For instance, as a non-limiting example, the plurality of walls 132 may be unitarily formed, monolithically formed, or unitarily and monolithically formed.

The cross-sectional geometry 101 can comprise a variety of different shapes within each of the plurality of hollow cells 130. For example, as shown in the embodiment of FIG. 1, the cross-sectional geometry 101 of each hollow cell 130 may be a hexagon. However, as will be described below, the plurality of hollow cells 130 may have cross-sectional geometries 101 that are different, e.g., where the cross-sectional geometry 101 is one of a hexagon, circle, square, or a triangle in non-limiting examples.

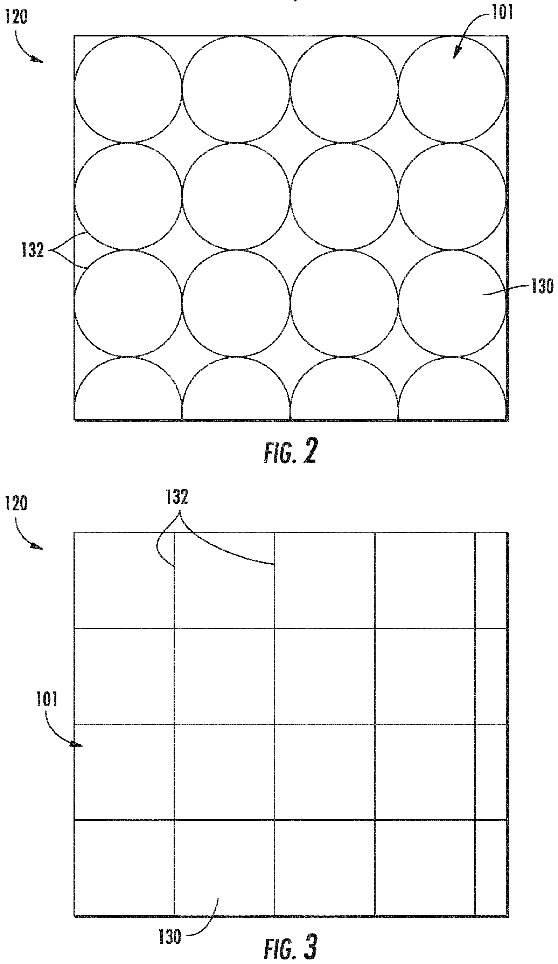

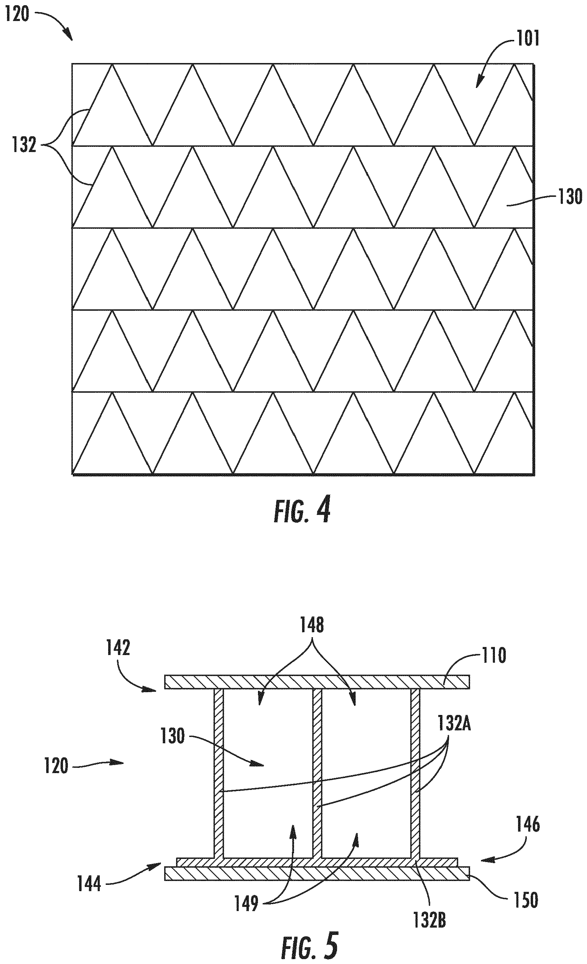

With reference to FIGS. 2-4, a variety of other exemplary cross-sectional geometries 101 are illustrated that can be utilized in the composite panel 100 illustrated in FIG. 1. For instance, in some embodiments, each of the plurality of hollow cells 130 may have a substantially circular shape, such as shown in FIG. 2. In some embodiments, each of the plurality of hollow cells 130 may have a substantially square or rectangular shape, such as shown in FIG. 3. In some embodiments, each of the plurality of hollow cells 130 may have a substantially triangular shape, such as an equilateral triangle shape, such as illustrated in FIG. 4. Moreover, while FIGS. 1-4 illustrate embodiments where each of the plurality of hollow cells 130 generally comprise a similar shape, it should be appreciated that in other embodiments, the plurality of hollow cells 130 may not all comprise the same general shape as one another. For example, a plurality of hollow cells 130 may comprise one or more hollow cells 130 having a substantially hexagonal shape, one or more hollow cells 130 having a circular shape, one or more hollow cells 130 having a square shape, or one or more hollow cells 130 having a triangular shape. While the plurality of hollow cells 130 are illustrated as having substantially similar sizes in the respective embodiments illustrated in FIGS. 2-4, in some embodiments, the plurality of hollow cells 130 may vary in size with respect to one another.

Moreover, the cross-sectional geometry 101 may have an open cross-sectional area that is smaller, larger, or have a different shape at one or more locations along at least a portion of one of the plurality of hollow cells 130. Various exemplary configurations of cross-sectional geometries 101 that are nonuniform are illustrated in FIGS. 5-12. For instance, as illustrated in FIG. 5, the cross-sectional geometry 101 from the top face 142 to the bottom face 144 is nonuniform for one or more of the plurality of hollow cells 130. That is, the cross-sectional geometry 101 may have an open cross-sectional area that is smaller, larger, or have a geometry that is a different shape at one or more locations along at least one of the plurality of hollow cells 130 to provide an overall cross-sectional geometry 101 that is nonuniform between its top side 141 and bottom side 143. Having a cross-sectional geometry 101 that is nonuniform can facilitate enhanced bonding with composite face sheet 110 or the composite back sheet 150, such as by providing additional material or surface area on a top side 141 or bottom side 143 of the core structure 120, while still reducing the amount of overall material used in the core structure 120 via the overall configuration of the plurality of hollow cells 130.

For example, each of the plurality of cells will have a top cross-sectional geometry 101a at its top face 142 and a bottom cross-sectional geometry 101b at its bottom face 144. The top cross-sectional geometry 101a and the bottom cross-sectional geometry 101b can be different from one another (e.g., one open cross-sectional area that is smaller than the other) to provide a cross-sectional geometry of the hollow cell that is nonuniform. The cross-sectional geometry 101 can thereby comprise a variety of different configurations at different locations. As illustrated in FIG. 1, in some embodiments, at least one of the plurality of hollow cells 130 of the composite panel 100 has a midspan cross-sectional geometry 101c at a location between the top face 142 and the bottom face 144 that has an open cross-sectional area smaller than that at the top face 142 or at the bottom face 144. As used herein, midspan refers to any location between the top faced 142 and the bottom face 144, whether it is halfway therebetween or skewed towards one face. In some embodiments, the midspan cross-sectional geometry 101c has an open cross-sectional area that is smaller than that at both the top cross-sectional geometry 101a and the bottom cross-sectional geometry 101b. Such embodiments provide an hourglass-type configuration within the hollow cell 130.

For example, as illustrated in FIG. 5, a cross-sectional slice of the cross-sectional geometry 101 of a section of the plurality of hollow cells 130 is shown. The cross-sectional geometry 101 is oriented such that the top face 142 is adjacent the composite face sheet 110 and the bottom face 144 is adjacent the composite back sheet 150. The one or more walls 132 are depicted with vertical walls 132a and a horizontal wall 132b parallel to the composite back sheet 150. In this particular embodiment, each of the plurality of hollow cells 130 has a closed face 146 and an open face 148. As used herein, "closed face" refers to the walls 132 of the core structure 120 enclosing (e.g., capping) the hollow cell 130 at one of the top face 142 or the bottom face 144. In such embodiments, the closed face (e.g., at the bottom face 144 in FIG. 5) would have an open cross-sectional area for the bottom cross-sectional geometry 101b that is smaller than (i.e., zero) than the open cross-sectional area for the top cross-sectional geometry 101a of the top face 142 that is an open face. In the embodiment depicted in FIG. 5, the closed face 146 is adjacent to the bottom face 144, e.g., on the end with the horizontal wall 132b. Also as used herein, the term "open face" refers to the cell 130 being open on either the top face 142, the bottom face 144, or both. In other words, the "open face" of the hollow cell 130 refers to the top face 142 or the bottom face 144 as having at least some open cross-sectional area between the vertical walls 132a of the one or more walls 132. In the embodiment of FIG. 5, the open face 148 is on the opposite end of the vertical walls 132a where there is no horizontal wall 132b adjacent the composite face sheet 110.

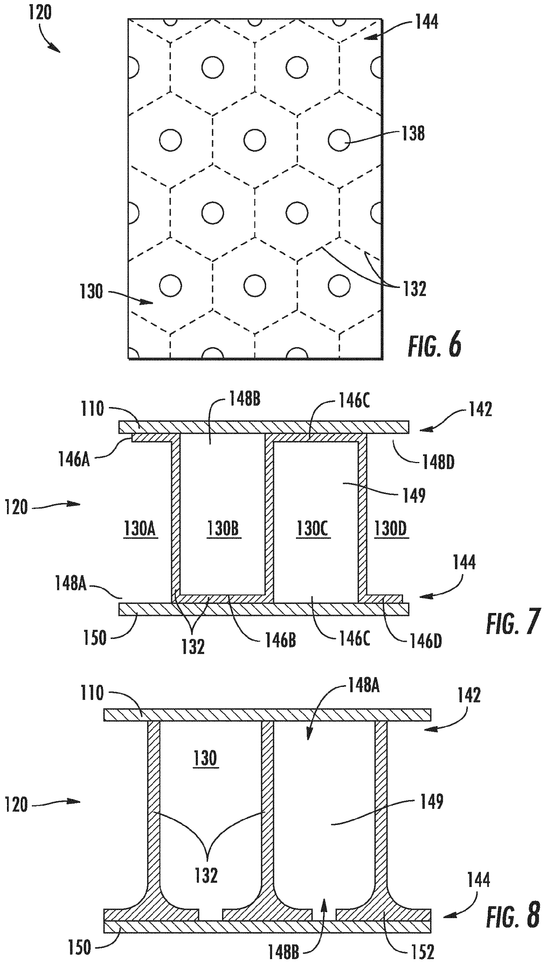

Referring now additionally to FIG. 6, a view of a composite panel 100 from a partially open bottom face 144' is shown, with the one or more walls 132 shown dashed. Each of the plurality of hollow cells 130 includes a hole 138. The hole 138 can be configured and utilized for removing debris or for providing airflow. For example, if the composite panel 100 is manufactured via binder jet printing, de-powdering may be necessary (e.g., removing loose powder from the hollow interior 149 of the hollow cell 130). The hole 138 would allow for the de-powdering, e.g., the removal of the powder resulting from binder jet printing. Although the hole 138 is shown in the center of each hollow cell 130 on the partially open bottom face 144', it will be appreciated that the hole 138 may additionally or alternatively be located on any of the one or more walls 132 of each hollow cell 130. Furthermore, the hole 138 may also be located off-center of each hollow cell 130. The hole 138 may additionally be in a different location in each hollow cell 130.

While FIG. 5 illustrates each top face 142 being an open face 148 and each bottom face 144 being a closed face 146, it should be appreciated that a variety of configurations within the composite panel 100 may alternatively or additionally be realized using a combination of open faces 148 and closed faces 146, or incorporation of partially open bottom faces 144' as illustrated in FIG. 6.

Referring now to FIG. 7, a cross-sectional slice of the core structure 120 with the plurality of hollow cells 130 is shown with the one or more walls 132 arranged such that openings for the hollow cells 130 are in an interspersed pattern (e.g., alternating or intermittent pattern of open faces 148 and closed faces 146). As illustrated in FIG. 7, the closed face 146 of each hollow cell 130 is in the alternating pattern with the open face 148 of a hollow cell 130 adjacent thereto, top to bottom and vice versa as a non-limiting example. It will be understood that multiple top faces 142 in adjacent hollow cells 130 could have closed faces 146, which may in turn be adjacent hollow cells with bottom faces 144 being closed faces 146 and that would still be considered interspersed. Further any suitable repeating pattern or random placement can be utilized to intersperse.

For example, the cross-sectional illustration depicts a first closed face 146a on the top face 142 and a first open face 148a on the bottom face 144 in a first hollow cell 130a; a second open face 148b on the top face 142 and a second closed face 146b in a second cell 130b; a third closed face 146c on the top face 142 and a third open face 148c in a third cell 130c; and a fourth open face 148d on the top face 142 and a fourth closed face 146d in a fourth cell 130d. The composite face sheet 110 and the composite back sheet 150 are also shown sandwiching the core structure 120. Such embodiments of interspersed (alternating or intermittent) open faces 148 and closed faces 146 on one or both of the top side 141 and the bottom side 143 of the core structure 120 can provide a composite panel 100 that still provides reduced weight and cost by lowering the amount of material used in the core structure 120, but provides enhanced bonding with the composite face sheet 110 or composite back sheet 150 via the additional material at their respective interfaces with the core structure 120.

Referring now to FIG. 8, a cross-sectional slice of the plurality of hollow cells 130 is shown with the first open face 148a in each hollow cell 130 along the top face 142 and the second open face 148b in each hollow cell 130 along the bottom face 144. As shown, each of the one or more walls 132 may also include a tapered interface 152 along the second open face 148b. The tapered interface 152 comprises additional material from the core structure 120 that extends inwards from at least one of the plurality of walls 132. The tapered interface 152 may thereby provide additional surface area for bonding with a composite face sheet 110 or composite back sheet 150, while also providing additional structural support at the interface (e.g., by distributing stress along the tapered interface 152 instead of a concentrating stress at a 90 degree joint). In some embodiments, the tapered interface 152 extends on each side of the one or more walls 132 and includes a curved configuration. For instance, the tapered interface 152 may have a constant or non-constant radius as it extends from the one or more walls 132.

It should be appreciated that tapered interfaces 152 may be utilized in a variety of configurations, such as with closed faces 146 or open faces 148, at one or both of the top faces 142 or bottom faces 144, and within each hollow cell 130 or within only some hollow cells 130.

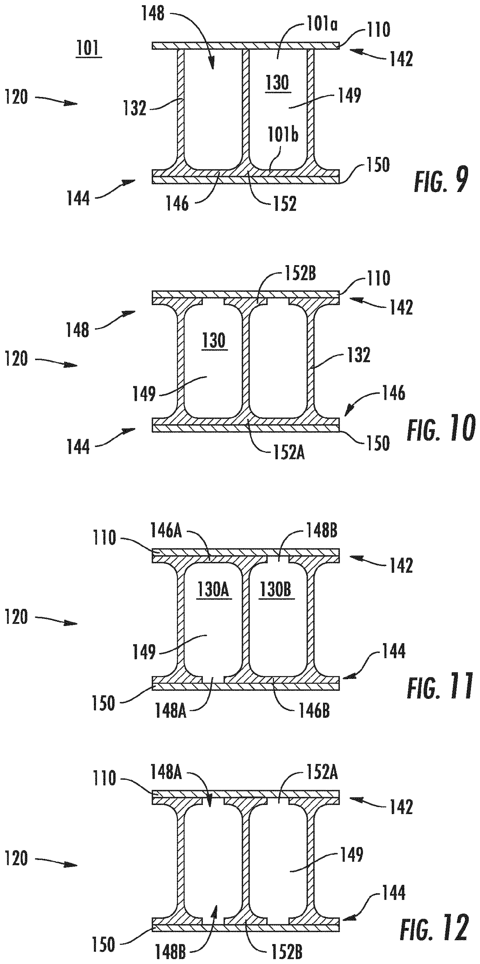

For example, with reference to FIG. 9, a cross-sectional slice of the plurality of the hollow cells 130 is shown with an open face 148 in each hollow cell 130 along the top face 142 and the closed face 146 in each hollow cell 130 along the bottom face 144. In the depicted embodiment, each hollow cell 130 further includes the tapered interface 152 on each side of the one or more walls 132. Further, the tapered interface 152 of each of the one or more walls 132 is at least part of the closed face 146, e.g., the tapered interface 152 of each of the one or more walls 132 extends such that it touches the adjacent tapered interface 152, and at least partially becomes the closed face 146.

Referring now to FIG. 10, a cross-sectional slice the plurality of hollow cells 130 are shown with the open face 148 in each hollow cell 130 along the top face 142 and the closed face 146 in each hollow cell 130 along the bottom face 144. In the depicted embodiment, each of the one or more walls 132 adjacent the closed face 146 further includes a first tapered interface 152a extending on either side of the one or more walls 132. Additionally, the first tapered interface 152a of each of the one or more walls 132 extends such that it touches an adjacent first tapered interface 152a, making the closed face 146 along the bottom face 144. Each of the one or more walls 132 may also have a second tapered interface 152b on the open face 148, such that each end of each of the one or more walls 132 has a tapered interface 152.

Referring now to FIG. 11, a cross-sectional slice of the core structure 120 is illustrated with the plurality of hollow cells 130 shown having top faces 142 and bottom faces 144 in an alternating pattern (e.g., similar to FIG. 7), with each of the one or more walls 132 further including the tapered interface 152. For example, as depicted, the first cell 130a has a first closed face 146a on the top face 142 and a first open face 148a on the bottom face 144. In the second cell 130b, there is a second closed face 146b on the bottom face 144 and the second open face 148b on the top face 142. Each of the one or more walls includes the tapered interface 152, with adjacent tapered interfaces 152 connecting and creating the first closed face 146a and the second closed face 146b. While certain embodiments are illustrated herein, the tapered interfaces may be present in any ordered or random pattern within the composite panel 100.

Referring now to FIG. 12, a cross-sectional slice of each of the plurality of hollow cells 130 is illustrated having the first open face 148a on the top face 142 and the second open face 148b on the bottom face 144. Further, each of the one or more walls 132 has the first tapered interface 152a with a curve on either side of the one or more walls 132 along the top face 142 and a curve on either side of the one or more walls 132 along the second tapered interface 152b on the side of the bottom face 144. While FIG. 12 illustrates each interface with the composite face sheet 110 and composite back sheet 150 has having a substantially similar profile, the respective interfaces may also vary in profile, shape, or size, such as based on a predetermined or predicted loading conditions.

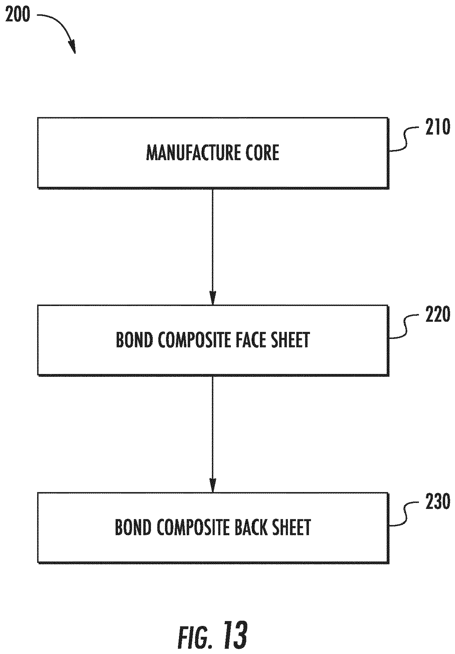

Referring now additionally to FIG. 13, a method 200 is illustrated for the manufacturing of composite panels 100 in accordance with one or embodiments described herein or illustrated in FIGS. 1-12. The method generally comprises manufacturing a core structure 120 in step 210 and bonding a composite face sheet 110 to the core structure 120 in step 220.

As discussed above with reference to FIGS. 1-12, the core structure generally comprises a plurality of hollow cells 130 defined by a plurality of walls 132 extending from a top face 142 on a top side 141 to a bottom face 144 on a bottom side 143 opposite the top side 141. The core structure 120 further comprises a cross-sectional geometry 101 from the top face 142 to the bottom face 144 is nonuniform for one or more of the plurality of hollow cells 130. For example, the plurality of hollow cells 130 can comprise a top cross-sectional geometry 101a at the top face142 that has a top cross-sectional area smaller than a bottom cross-sectional area of the bottom cross-sectional geometry 101b at the bottom face 144.

In some embodiments, manufacturing the core structure 120 in step 210 comprises additively manufacturing the plurality of walls 132 such as via a binder jet or similar process to produce an additively manufactured core structure. Additive manufacturing the plurality of walls 132 can comprise building some or all of the plurality of walls 132 in a layer-by-layer manner, such as by using a powder feedstock material.

In such embodiments, additive manufacturing the plurality of walls 132 can result in a residual amount of loose unconsolidated powder feedstock in the hollow interior 139 of each of the plurality of hollow cells 130. Thus, in some embodiments, the method 200 may further comprise removing the powder feedstock from at least one of the plurality of hollows cells 130. For example, the powder feedstock may be poured or vacuumed out of an open face 148 of the hollow cell 130.

In even some embodiments, the core structure 120 additively manufactured in step 210 may comprise a hole 138 or open face in at least one of the top face 142 or the bottom face 144. The hole 138 or open face may facilitate for the removal of powder feedstock from a potentially otherwise enclosed hollow interior 149. Thus, in such embodiments, core structures 120 having complex geometries may be manufactured using additive manufacturing, along with having a cross-sectional geometry that is nonuniform (e.g., having a closed face 146) to facilitate enhanced bonding with composite face sheets 110 or composite back sheets 150, while still allowing for the removal of powder feedstock from the hollow interior 149.

Removal the powder feedstock can further allow for the unused powder feedstock to be recycled and used to make core structures 120 for additional composite panels 100 or other parts of the composite panel 100.

While additive manufacturing is disclosed as an exemplary method for manufacturing the core structure 120, it should be appreciated that other ceramic processing techniques may also be utilized within the scope of this disclosure such as, for example, extrusion processing. Depending on the materials used, the manufacturing process, or other manufacturing variables, the core structure 120 may be ready for use in the composite panel 100, or may require one or more further intermediate processing steps. For example, in some embodiments, the core structure 120 may be in a green state after additive manufacturing. Thus, in such embodiments, the method 200 may further comprise curing the core structure 120 to remove moister or sintering the core structure 120.

With continued reference to FIG. 13, the method further comprises bonding the composite face sheet 110 to the top side 141 of the core structure 120 in step 220. Bonding may comprise any suitable process to mechanically integrate the composite face sheet 110 with the core structure 120. For example, bonding in step 220 may comprise adhesive bonding. In some embodiments, bonding in step 220 may comprise one or more manufacturing steps utilized in manufacturing ceramic matrix composites, such as infiltration of the ceramic material or curing.

In some embodiments, the method 200 may further comprise bonding a composite back sheet 150 to the bottom side 143 of the core structure 120 in step 230. The composite back sheet 150 may be bonded to the core structure 120 at the same time, afterwards, or before the composite face sheet 110 is bonded to the core structure 120. Such embodiments may thereby produce a composite panel 100 with a composite face sheet 110 and a composite back sheet 150 on opposite sides of the core structure 120.

The composite panel 100 as disclosed and described herein may be used in a variety of industrial machines, including but not limited to one or more components of turbomachines. Moreover, the composite panel 100 disclosed and described herein can provide a more cost-effective, lighter, and potentially stronger alternative to solid composite structures. However, the composite panels disclosed and described herein further provides enhanced bonding between the core structure 120 and the composite face sheet 110 or between the core structure 120 and the composite back sheet 150.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:
A composite panel comprising a core structure comprising a plurality of hollow cells, the plurality of hollow cells defined by a plurality of walls extending from a first face to a second face, wherein a cross-sectional geometry from the first face to the second face is nonuniform for at least one of the plurality of hollow cells; and a composite face sheet bonded to the core structure at the first face.

The composite panel of any clause herein, wherein first cells of the plurality of hollow cells comprise a first open cross-sectional area at the first face that is larger than a second open cross-sectional area at the second face.

The composite panel of any clause herein, wherein the second face is a closed face.

The composite panel of any clause herein, wherein the second face comprises a tapered interface extending inwards from at least one of the plurality of the walls.

The composite panel of any clause herein, wherein the tapered interface has a constant radius as it extends inwards from at least one of the plurality of walls.

The composite panel of any clause herein, wherein second cells of the plurality of hollow cells comprise a first open cross-sectional area at the first face that is smaller than a second open cross-sectional area at the second face.

The composite panel of any clause herein, wherein the first cells and the second cells are interspersed with one another.

The composite panel of any clause herein, wherein the cross-sectional geometry is nonuniform in a height direction between the first face and the second face.

The composite panel of any clause herein, wherein at least one of the plurality of hollow cells has a midspan open cross-sectional area at a location between the first face and the second face that is smaller than at least one of a first open cross-sectional area at the first face or a second open cross-sectional area at the second face.

The composite panel of any clause herein, wherein the midspan open cross-sectional area is smaller than both the first open cross-sectional area and the second open cross-sectional area.

The composite panel of any clause herein, wherein the plurality of hollow cells comprise a hexagonal shape between the first face and the second face.

The composite panel of any clause herein, wherein the composite face sheet comprises a ceramic matrix composite.

The composite panel of any clause herein, wherein the plurality of walls comprise silicon, silicon carbide, alumina, carbon, aluminosilicates, or combinations thereof.

The composite panel of any clause herein, further comprising a composite back sheet bonded to the core structure at the second face.

The composite panel of any clause herein, wherein the core structure is an additively manufactured core structure.

The composite panel of any clause herein, wherein the first face for first cells of the plurality of hollow cells is partially closed, and wherein the second face for second cells of the plurality of hollow cells is partially closed.

The composite panel of any clause herein, wherein the first face for first cells of the plurality of hollow cells comprise is closed, and wherein the second face for second cells of the plurality of hollow cells is closed.

The composite panel of any clause herein, wherein the first cells and the second cells alternate.

A method of manufacturing a composite panel, the method comprising manufacturing a core structure comprising a plurality of hollow cells defined by a plurality of walls extending from a first face to a second face, wherein a cross-sectional geometry from the first face to the second face is nonuniform for one or more of the plurality of hollow cells; and bonding a composite face sheet to the core structure at the first face.

The method of any clause herein, further comprising bonding a composite back sheet to the core structure at the second face.

The method of any clause herein, wherein both the composite face sheet and the composite back sheet each comprise a ceramic matrix composite.

The method of any clause herein, wherein manufacturing the core structure comprises additively manufacturing the plurality of walls

The method of any clause herein, wherein at least a first plurality of hollow cells each comprise a first open cross-sectional area at the first face that is smaller than a second open cross-sectional area at the second face.

The method of any clause herein, wherein a second plurality of hollow cells each comprise a first open cross-sectional area at the first face that is larger than a second open cross-sectional area at the second face.

## Claims

1. A composite panel (100) comprising:
a core structure (120) comprising a plurality of hollow cells (130), the plurality of hollow cells (130) defined by a plurality of walls (132) extending from a first face (142) to a second face (144), wherein a cross-sectional geometry from the first face (142) to the second face (144) is nonuniform for at least one of the plurality of hollow cells (130); and
a composite face sheet (110) bonded to the core structure (120) at the first face (142).

2. The composite panel (100) of claim 1, wherein first cells of the plurality of hollow cells (130) comprise a first open cross-sectional area (101a) at the first face (142) that is larger than a second open cross-sectional area (101b) at the second face (144).

3. The composite panel (100) according to claim 2, wherein the second face (144) is a closed face.

4. The composite panel (100) according to claim 2, wherein the second face (144) comprises a tapered interface extending inwards from at least one of the plurality of the walls (132).

5. The composite panel (100) according to claim 4, wherein the tapered interface has a constant radius as it extends inwards from at least one of the plurality of walls (132).

6. The composite panel (100) according to claim 2, wherein second cells of the plurality of hollow cells (130) comprise a first open cross-sectional area (101a) at the first face (142) that is smaller than a second open cross-sectional area (101b) at the second face (144).

7. The composite panel (100) according to claim 6, wherein the first cells and the second cells are interspersed with one another.

8. The composite panel (100) according to any of the preceding claims, wherein the cross-sectional geometry is nonuniform in a height direction between the first face (142) and the second face (144).

9. The composite panel (100) according to any of the preceding claims, wherein at least one of the plurality of hollow cells (130) has a midspan open cross-sectional area (101c) at a location between the first face (142) and the second face (144) that is smaller than at least one of a first open cross-sectional area (101a) at the first face (142) or a second open cross-sectional area (101b) at the second face (144).

10. The composite panel (100) according to any of the preceding claims, wherein the plurality of hollow cells (130) comprise a hexagonal shape between the first face (142) and the second face (144).

11. The composite panel (100) according to any of the preceding claims, wherein the composite face sheet (110) comprises a ceramic matrix composite.

12. The composite panel (100) according to any of the preceding claims, wherein the plurality of walls (132) comprise silicon, silicon carbide, alumina, carbon, aluminosilicates, or combinations thereof.

13. The composite panel (100) according to any of the preceding claims, further comprising a composite back sheet (150) bonded to the core structure (120) at the second face (144).

14. The composite panel (100) according to any of the preceding claims, wherein the core structure (120) is an additively manufactured core structure (120).

15. The composite panel (100) according to any of the preceding claims, wherein the first face (142) for first cells of the plurality of hollow cells (130) is partially closed, and wherein the second face (144) for second cells of the plurality of hollow cells (130) is partially closed.
